# EUROPÄISCHE PATENTSCHRIFT

(11) **EP 0 733 835 B1**
(45) Veröffentlichungstag und Bekanntmachung des Hinweises auf die Patenterteilung: **26.04.2000**
(21) Anmeldenummer: 96102521.0
(22) Anmeldetag: 20.02.1996
(51) Int. Cl.: F16K 3/02, F16J 15/56

(54) **Absperrarmatur**
Shut-off device
Soupape d'arrêt

(30) Priorität: 27.02.1995 DE 19506753
(43) Veröffentlichungstag der Anmeldung: 25.09.1996
(73) Patentinhaber: Erhard GmbH & Co, 89522 Heidenheim (DE)
(72) Erfinder: Bosch, Eduard, 86747 Maihingen (DE); Funcke, Erhard, Ing., 86720 Nördlingen (DE); Heyl, Karl-Heinz, Dipl.-Ing. (FH), 86720 Nördlingen (DE); Schumann, Hans, Dipl.-Ing. (FH), 86720 Nördlingen (DE)

(56) Entgegenhaltungen:
- EP-A- 0 487 905
- WO-A-93/00536
- DE-A- 3 009 896
- DE-B- 1 214 495
- DE-U- 8 800 803
- GB-A- 1 103 272
- US-A- 3 765 647

## Beschreibung

Die Erfindung betrifft eine Absperrarmatur nach dem Oberbegriff des Anspruchs 1.

In der gattungsbildenden EP-A-487 905 werden zwei um die Platte umlaufende Vierkant-Stränge, zwischen denen ein O-Ring angeordnet ist, vorgeschlagen. Diese Dichtungsstränge werden mit einer Brille gegeneinander mit dem gewünschten Vordruck gedrückt.

Nachteilig ist hier der hohe Anpreßdruck, der erforderlich ist, um die nicht endlosen Dichtungsstränge aus Vierkant-Material gegeneinander und gegen den Endbereich jeder der beiden Schenkel des U-förmigen Dichtkörpers zu verpressen.

Eine weitere Armatur ist aus DE 88 00 803 U1 bekannt. Bei dieser bekannten Absperrarmatur ist zum Zweck der oberen Abdichtung der Schieberplatte am Austritt zwischen den Gehäusehälften ein Stopfbuchsenraum vorgesehen, in dem eine Stopfbuchsenpackung angeordnet ist, die von einer Stopfbuchse gehalten wird. Die Stopfbuchse ist mittels Muttern anziehbar, die auf Stehbolzen in die Gehäusehälften geschraubt sind und auf die Stopfbuchse wirken.

Aus der DE-PS 30 09 896 ist es bekannt, in einer Querdichtung aus einem gummielastischen Profil auf der der Schieberplatte zugewandten Seite eine Ausnehmung vorzusehen, in welcher eine Polytetrafluoräthylen-Schnur enthalten ist, die mit der der Schieberplatte zugewandten Seite gegen diese gedrückt wird.

Diese herkömmlichen Stopfbuchsenpackungen und bekannten Querdichtungen aus Elastomer-PTFE weisen jedoch wesentliche Nachteile auf. Die Dichtgeometrie erfordert einen hohen Anpreßdruck auf die Schieberplatte, der nur durch häufiges Nachstellen erzielt werden kann. Dies bedingt hohe Betätigungskräfte der Schieberplatte. Die Lebensdauer herkömmlicher Stopfbuchsenpackungen und Querdichtungen ist daher gering. Zudem gewährleistet der bekannte Stand der Technik eine nur geringe Abstreiferfunktion.

Der Erfindung liegt die Aufgabe zu Grunde, eine Absperrarmatur mit einer Querdichtung der eingangs beschriebenen Art zu entwickeln, die sich durch verbesserte Dichtheit, Leichtgängigkeit, Wartungsarmatur und Lebensdauer sowie eine leichte Austauschbarkeit von außen - ohne Ausbau der Armatur aus der Rohrleitung - auszeichnet und praktisch wartungsfrei ist.

Diese Aufgabe wird erfindungsgemäß dadurch gelöst, daß die Profildichtung einteilig ausgebildet ist, an der Innenfläche dieser einteiligen Profildichtung zwei die Schieberplatte nach außen abdichtende Dichtlippen angeordnet sind, zwischen diesen beiden Dichtlippen ein beidseitiges oder voll umlaufendes stabiles Führungsband angeordnet ist, dessen Innenfläche mit der Schieberplatte zusammenwirkt, und daß das Führungsband aus Thermoplast mit oder ohne Füllstoff besteht.

Mit der Erfindung werden erstaunlich viele Vorteile erzielt:

Der im unteren Bereich kreissegmentförmig und komplementär zur Profildichtung ausgebildete Profildichtungsraum bewirkt beim Anpressen der einteiligen Profildichtung einen optimalen Anpreßdruck der unteren Dichtlippe auf die Schieberplatte. Diese Primärabdichtung wird durch die Sekundärabdichtung der oberen Dichtlippe unterstützt. Ein Nachziehen der Profildichtung entfällt. Die Armatur ist praktisch wartungsfrei.

Diese gute Dichtwirkung wird durch das beidseitige oder voll umlaufende stabile Führungsband verstärkt, welches die Stabilität der Profildichtung erhöht und somit ein Fließen der Dichtung verhindert. Gleichzeitig erhöht die mit der Schieberplatte zusammenwirkende Innenfläche des Führungsbandes deren Gleiteigenschaft; die Bedienkräfte reduzieren sich wesentlich. Das mit der Schieberplatte zusammenwirkende Führungsband weist den weiteren Vorteil auf, daß seine Innenflächen als Abstreifflächen dienen, die partikuläre Stoffe von der Schieberplatte abstreifen. Zweckmäßigerweise werden für die Profildichtung Elastomer und für das Führungsband Thermoplast mit oder ohne Füllstoff als Werkstoff vorgeschlagen. Thermoplast mit oder ohne Füllstoff weist eine relativ geringe Elastizität und Verformbarkeit bei hoher Gleiteigenschaft auf und verleiht der Prodilichtung die erforderliche Stabilität. Der Werkstoff Elastomer gewährleistet eine optimale Verformbarkeit der Profildichtung.

Diese Ausbildung des Abdichtsystems weist einen weiteren Vorteil auf, der von ganz enormer wirtschaftlicher Bedeutung ist. Sie ermöglicht nämlich eine besonders einfache und kostengünstige Auswechslung der Profildichtung. Bei den gängigen Armaturen war nämlich eine Auswechslung der Profildichtung nur möglich, wenn das gesamte Gehäuse zunächst aus dem Leitungssystem ausgebaut und dann auseinandergenommen bzw. zerlegt worden war. Das erfindungsgemäße Abdichtsystem eröffnet völlig neue Möglichkeiten zur Auswechslung der Profildichtung. Als reiner Montagevorgang ist gemäß der Erfindung lediglich die Verbindung zwischen Schieberplatte und Spindelmutter zu entfernen. Danach muß man nur noch die Befestigungsschrauben der Abdeckplatte und letztere zusammen mit dem Druckstück über die Schieberplatte nach oben hin abziehen. Dadurch wird der Profildichtungsraum zugänglich. Man kann also bei eingebauter Armatur die Profildichtung in denkbar einfacher Weise auswechseln. Nach Auswechslung der Profildichtung wird wiederum die Abdeckplatte mit dem Druckstück von oben über die Schieberplatte so eingesetzt, daß ihr unterer Endbereich in den Profildichtungsraum eindringt und die Dichtung zusammendrückt. Die Abdeckplatte muß dann befestigt werden; danach kann wiederum die Verbindung zwischen Schieberplatte und Spindel hergestellt werden.

Vorteilhafterweise weist die Profildichtung unterhalb und hinter der unteren Dichtlippe eine Ausnehmung auf, die mit der Schieberplatte eine Druckkammer bildet, in die das mit Druck beaufschlagte Medium fließt. Diese Weiterbildung der Erfindung erhöht wiederum den Anpreßdruck der unteren Dichtlippe, so daß das Erfordernis der zuverlässigen Primärabdichtung auch bei Armaturen mit größerer Nennweite voll erfüllt wird.

Nach einer Weiterbildung der Erfindung liegt die untere äußere Begrenzungsfläche des Druckstücks auf der oberen äußeren Begrenzungsfläche der Profildichtung satt auf. Ferner ist zwischen der unteren inneren Begrenzungsfläche des Druckstücks und der oberen inneren Begrenzungsfläche der Profildichtung im nicht vorgespannten Zustand ein Spalt ausgebildet. Beim Anpressen des Druckstücks auf die Profildichtung wird somit zunächst die untere Dichtlippe und anschließend die obere Dichtlippe an die Schieberplatte gedrückt. Die Sekundärabdichtung erfolgt somit zeitlich nach der Primärabdichtung. Die besondere Geometrie des Druckstücks und der Profildichtung definiert damit in vorteilhafter Weise die zeitliche Reihenfolge von Primär- und Sekundärabdichtung bereits im Montagevorgang und gewährleistet einen gegenüber der Sekundärabdichtung höheren Anpreßdruck der Primärabdichtung.

Nach einer anderen Weiterbildung der Erfindung ist im oberen und unteren Bereich der Innenfläche der Profildichtung jeweils ein Rücksprung ausgebildet, so daß die Dichtlippen nicht mit der Profildichtung abschließen. Bei den gängigen Armaturen konnte, bedingt durch die Fließeigenschaft des Elastomers, ein Mitreißen der Querdichtung beim Öffnen und Schließen der Schieberplatte nicht ausgeschlossen werden. Dies führte zu einer Verkeilung der Querdichtung zwischen dem Gehäuse bzw. Druckstück und der Schieberplatte. Die verkeilten Querdichtungsteile drohten zu reißen. Der oben vorgeschlagene Rücksprung verhindert diesen Mitreißeffekt auf verblüffend einfache Weise, da die Schieberplatte im Übergangsbereich zwischen Gehäuse bzw. Druckstück und Profildichtung keinen Angriffspunkt mehr findet. Zudem schließt die symmetrisch ausgebildete Profildichtung Montagefehler aus, da die Profiloberseite nicht mehr mit der Profilunterseite verwechselt werden kann. Die Dichtlippen können eine runde Außenkontur aufweisen. Die Anlagefläche auf der Schieberplatte bleibt gering. Dadurch wird ein Mitreißen der Dichtlippen beim Anfahren der Armatur verhindert. Die Stabilität der Dichtlippen ist gewährleistet.

Nach einer weiteren Ausbildungsform der Erfindung bildet die untere Dichtlippe im Querschnitt ein Dreieck, dessen eine Kante auf der Schieberplatte aufliegt. Diese Ausbildungsform eignet sich für Abdichtsysteme, die einen hohen Anpreßdruck der Primärabdichtung erfordern. Die vorgeschlagene Kante ermöglicht ein Optimum zwischen den beiden Kriterien Stabilität der Profildichtung und Ausschluß des Mitreißeffektes.

Die Erfindung wird im folgenden anhand zweier Ausführungsbeispiele und der beiliegenden Zeichnungen näher erläutert. In letzteren zeigen:
- Fig. 1: einen Längsschnitt durch ein Abdichtsystem für Plattenschieber nach außen mit einer symmetrischen Profildichtung,
- Fig. 2: einen Längsschnitt durch ein Abdichtsystem für Plattenschieber nach außen mit einer asymmetrischen Profildichtung.

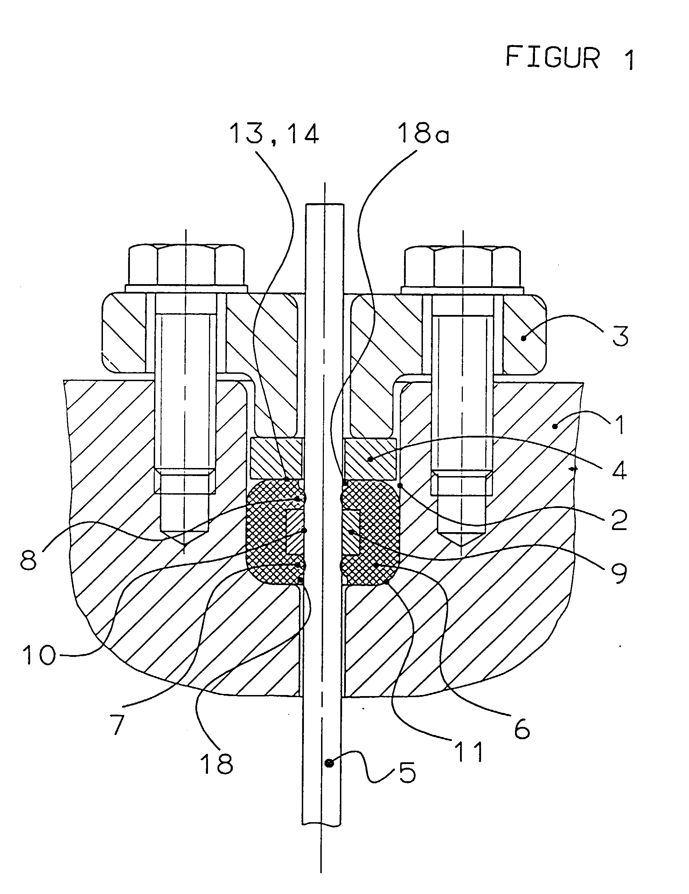

In Figur 1 ist eine auf jeder Seite des Schiebergehäuses quer verlaufende Vertiefung zur Bildung des Profildichtungsraumes (2) gezeigt, der seitlich und nach unten begrenzt ist. Die aufsetzbare Abdeckplatte (3) drückt mittels eines Druckstücks (4) auf die Profildichtung (6). An der Innenfläche der Profildichtung sind zwei die Schieberplatte (5) nach außen abdichtende kreisrunde Dichtlippen (7, 8) angeordnet. Zwischen diesen beiden verläuft ein beidseitiges oder voll umlaufendes stabiles Führungsband (9), dessen Innenfläche mit der Schieberplatte (5) zusammenwirkt. Deutlich erkennbar ist der im unteren Bereich kreissegmentförmig ausgebildete Profildichtungsraum (11); die Profildichtung (6) ist hierzu komplementär ausgebildet. Ferner zeigt Figur 1 einen oberen und unteren Rücksprung (18, 18a) an der Profildichtung.

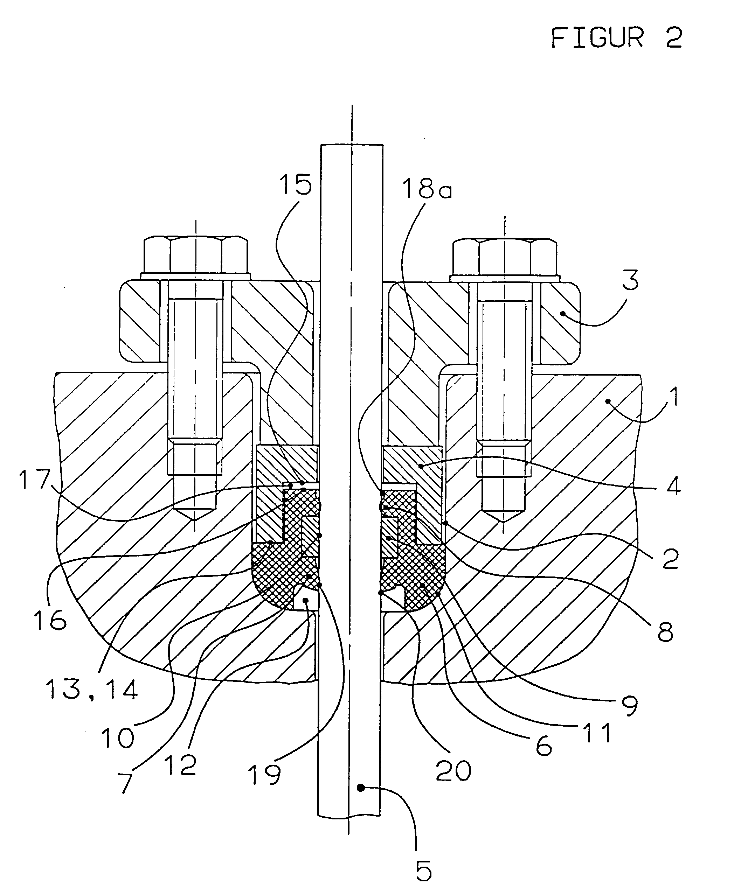

Figur 2 zeigt einen Längsschnitt durch ein Abdichtsystem für Plattenschieber nach außen mit einer asymmetrischen Profildichtung. Die Profildichtung (6) weist unterhalb und hinter der unteren Dichtlippe (7) eine Ausnehmung auf, die mit der Schieberplatte (5) eine Druckkammer (12) bildet, in die das mit Druck beaufschlagte Medium fließen kann. Die untere äußere Begrenzungsfläche (13) des Druckstücks (4) liegt auf der oberen äußeren Begrenzungsfläche (14) der Profildichtung satt auf, während zwischen der inneren unteren Begrenzungsfläche (15) des Druckstücks (4) und inneren oberen Begrenzungsfläche (16) der Profildichtung (6) im nicht vorgespannten Zustand ein Spalt (17) ausgebildet ist. Die untere Dichtlippe bildet im Querschnitt ein Dreieck (20), dessen eine Kante (19) an der Schieberplatte (5) anliegt.

## Patentansprüche

1. Absperrarmatur in einer Rohrleitung bestehend aus einem zweiteiligen Schiebergehäuse (1) mit darin angeordneter Schieberplatte (5), einem Abdichtsystem zur Abdichtung der Schieberplatte (5) nach außen, einer auf das Schiebergehäuse (1) aufsetzbaren Abdeckplatte (3) und einem Druckstück (4), wobei:
- an jedem Gehäuseteil des zweiteiligen Schiebergehäuses (1) eine quer zur Rohrleitung verlaufende Vertiefung zur Bildung eines seitlich und nach unten hin begrenzten Profildichtungsraumes (2) vorgesehen ist;
- das Abdichtsystem eine, die Schieberplatte (5) allseitig umgebende Profildichtung (6) aufweist;
- die untere äußere Begrenzungsfläche der Profildichtung (6) kreissegmentförmig und komplementär zum im unteren, äußeren Teil ebenfalls kreissegmentförmig ausgebildeten Profildichtungsraum (2) angeordnet ist;
- die Abdeckplatte (3) mittels des Druckstückes (4) auf die Profildichtung (6) drückt; und
- die Profildichtung (6) aus Elastomer besteht und von außen austauschbar ist, ohne daß die Armatur aus der Rohrleitung ausgebaut werden muß,
**dadurch gekennzeichnet,**
- daß die Profildichtung (6) einteilig ausgebildet ist;
- daß an der Innenfläche dieser einteiligen Profildichtung (6) zwei die Schieberplatte (5) nach außen abdichtende Dichtlippen (7,8) angeordnet sind;
- daß zwischen diesen beiden Dichtlippen (7,8) ein beidseitiges oder voll umlaufendes stabiles Führungsband (9) angeordnet ist, dessen Innenfläche (10) mit der Schieberplatte (5) zusammenwirkt, und
- daß das Führungsband (9) aus Thermoplast mit oder ohne Füllstoff besteht.

2. Absperrarmatur nach Anspruch 1, **dadurch gekennzeichnet, daß** die Profildichtung (6) unterhalb und hinter der unteren Dichtlippe (7) eine Ausnehmung aufweist, die mit der Schieberplatte (5) eine Druckkammer (12) bildet, in die das mit Druck beaufschlagte Medium fließt und dadurch den Anpreßdruck der unteren Dichtlippe (7) erhöht.

3. Absperrarmatur nach einem der vorhergehenden Ansprüche, **dadurch gekennzeichnet, daß** die untere äußere Begrenzungsfläche (13) des Druckstücks (4) auf der oberen äußeren Begrenzungsfläche (14) der Profildichtung (6) satt aufliegt, und daß zwischen der unteren inneren Begrenzungsfläche (15) des Druckstücks (4) und der oberen inneren Begrenzungsfläche (16) der Profildichtung (6) im nicht vorgespannten Zustand ein Spalt (17) ausgebildet ist, und daß beim Anpressen des Druckstücks (4) auf die Profildichtung (6) zuerst die untere Dichtlippe (7) zur Primärabdichtung und anschließend die obere Dichtlippe (8) zur Sekundärabdichtung an die Schieberplatte (5) gedrückt wird.

4. Absperrarmatur nach einem der vorhergehenden Ansprüche, **dadurch gekennzeichnet, daß** im oberen und unteren Bereich der Innenfläche der Profildichtung (6) jeweils ein Rücksprung (18, 18a) ausgebildet ist, so daß die Dichtlippen (7, 8) nicht mit der Profildichtung (6) abschließen.

5. Absperrarmatur nach einem der vorhergehenden Ansprüche, **dadurch gekennzeichnet, daß** die Dichtlippen (7, 8) eine runde Außenkontur aufweisen.

6. Absperrarmatur nach einem der vorhergehenden Ansprüche, **dadurch gekennzeichnet, daß** die untere Dichtlippe (7) im Querschnitt ein Dreieck (20) bildet, dessen eine Kante (19) auf der Schieberplatte (5) aufliegt.

## Claims

1. Shut-off device in a pipeline consisting of a two-piece body (1 ) with built-in gate (5), a sealing system for sealing the gate (5) towards the outside, a cover plate (3) for placing onto the body (1), and a compressor (4), where:
- a recess is provided at each body component of the two-piece body (1 ) transversely to the pipeline in order to form a profile sealing space (2) limited laterally and downwards;
- the sealing system has a profile seal (6) surrounding the gate (5) totally;
- the lower external peripheral area of the profile seal (6) is arranged in circular segments and complementary to the profile sealing space (2) in the lower external profile sealing space which is designed also in circular segments;
- the cover plate (3) presses onto the profile seal (6) by means of the compressor (4); and
- the profile seal (6) consists of elastomer and is replaceable from the outside without removing the valve from the pipeline
**characterised in that:**
- the profile seal (6) is undivided;
- two sealing lips (7, 8) are arranged at the internal surfaces of this undivided profile seal (6), sealing the gate (5) towards the outside;
- a solid guide tape (9) is arranged between these sealing lips (7, 8), on both sides or surrounding them totally with its internal surface (10) in coordination with the gate (5); and
- the guide tape (9) consisting of thermoplastic is made with or without filling material.

2. Shut-off device according to claim 1, **characterised in that** the profile seal (6) is provided with a recess below and behind the lower sealing lip (7) which forms a compression chamber (12) with the gate (5), into which the pressure of the flow medium acts, thus increasing the contact pressure of the lower sealing lip (7).

3. Shut-off device according to one of the above claims, **characterised in that** the lower external peripheral area (13) of the compressor (4) sits close on the upper external peripheral area (14) of the profile seal (6), and that a gap (17) is formed when the profile seal is not preset, between the lower internal peripheral area (15) of the compressor (4) and the upper internal peripheral area (16) of the profile seal (6), and that when pressing the compressor (4) onto the profile seal (6) at first the lower sealing lip (7) for primary sealing and subsequently the upper sealing lip (8) for secondary sealing is pressed to the gate (5).

4. Shut-off device according to one of the above claims, **characterised in that** a recess (18, 18a) is formed each in the upper and lower area of the internal surfaces of the profile seal (6) so that the sealing lips (7, 8) protrude off the profile seal (6).

5. Shut-off device according to one of the above claims, **characterised in that** the sealing lips (7, 8) have a round external contour.

6. Shut-off device according to one of the above claims, **characterised in that** the lower sealing lip (7) forms a cross-sectional triangle (20) with its one edge (19) being resting on the gate (5).

## Revendications

1. Soupape d'arrêt dans une conduite, composée d'un corps (1) séparé à deux pièces avec obturateur (5) incorporé, un système d'étanchéité pour effectuer l'étanchéité de l'obturateur (5) vers l'extérieur, un couvercle (3) à placer sur le corps (1) et un compresseur (4), où:
- un emboîtement est prévu sur chaque pièce du corps (1) à deux pièces transversalement à la conduite pour former un espace du joint profilé (2) limité latéralement et vers le bas;
- le système d'étanchéité a un joint profilé (6) placé entièrement autour de l'obturateur (5);
- la périphérie inférieure et extérieure du joint profilé (6) est placée en segments circulaires et de manière complémentaire à l'espace du joint profilé (2) inférieur et extérieur qui est conçu aussi en segments circulaires;
- le couvercle (3) est pressé au joint profilé (6) moyenant le compresseur (4); et
- le joint profilé (6) est composé d'élastomère et est remplaçable de l'extérieur sans démonter la vanne de la conduite
**caractérisée en ce que:**
- le joint profilé (6) est d'une seule pièce;
- deux lèvres d'étanchéité (7, 8) sont arrangées à la surface intérieure de ce joint profilé (6) d'une seule pièce, qui effectuent l'étanchéité de l'obturateur (5) vers l'extérieur;
- un ruban de guidage (9) est arrangé entre ces deux lèvres d'étanchéité (7, 8) des deux côtés ou entièrement autour des lèvres avec sa surface intérieure (10) en coordination avec l'obturateur (5); et
- le ruban de guidage (9) est composé de thermoplastique avec ou sans matière de remplissage.

2. Soupape d'arrêt selon la revendication 1, **caractérisée en ce que** le joint profilé (6) a un emboîtement sous et derrière la lèvre d'étanchéité inférieure (7) qui forme une chambre de compression (12) en combinaison avec l'obturateur (5), dans laquelle agit le fluide véhiculé mis sous pression et ainsi augmente la pression de contact de la lèvre d'étanchéité inférieure (7).

3. Soupape d'arrêt selon l'une des revendications susmentionnées, **caractérisée en ce que** la périphérie inférieure et extérieure (13) du compresseur (4) est en contact étroit avec la péri- phérie supérieure et extérieure (14) du joint profilé (6), et qu'un interstice (17) est formé si le joint n'est pas précontraint, entre la périphérie inférieure et intérieure (15) du compresseur (4) et la périphérie supérieure et intérieure (16) du joint profilé (6), et qu'en pressant le compresseur (4) contre le joint profilé (6) d'abord la lèvre d'étanchéité inférieure (7) est pressée à l'obturateur (5) pour effectuer l'étanchéité primaire et puis la lèvre supérieure (8) pour effectuer l'étanchéité secondaire.

4. Soupape d'arrêt selon l'une des revendications susmentionnées, **caractérisée en ce qu'**un emboîtement (18, 18a) chacun est formé dans les sections supérieure et inférieure de surface intérieure du joint profilé (6) pour effectuer que les lèvres d'étanchéité (7, 8) font saillie du joint profilé (6).

5. Soupape d'arrêt selon l'une des revendications susmentionnées, **caractérisée en ce que** les lèvres d'étanchéité (7, 8) ont un contour extérieur circulaire.

6. Soupape d'arrêt selon l'une des revendications susmentionnées, **caractérisée en ce que** la lèvre d'étanchéité inférieure (7) forme un triangle (20) en travers avec un bord (19) en contact avec l'obturateur (5).
